# EUROPÄISCHE PATENTSCHRIFT

(11) **EP 1 552 097 B1**
(45) Veröffentlichungstag und Bekanntmachung des Hinweises auf die Patenterteilung: **12.12.2012**
(21) Anmeldenummer: 03753327.0
(22) Anmeldetag: 29.09.2003
(51) Int. Cl.: F16F 15/12, F16D 3/62, E05F 15/16, F16F 15/124, F16H 55/14

(54) **GETRIEBEVORRICHTUNG, INSBESONDERE FÜR VERSTELLEINRICHTUNGEN IN KRAFTFAHRZEUGEN**
GEARBOX DEVICE, IN PARTICULAR FOR ACTUATORS IN MOTOR VEHICLES
DISPOSITIF D'ENGRENAGE, EN PARTICULIER POUR DES MECANISMES DE REGLAGE DE VEHICULES AUTOMOBILES

(30) Priorität: 07.10.2002 DE 10246711
(43) Veröffentlichungstag der Anmeldung: 13.07.2005
(73) Patentinhaber: ROBERT BOSCH GMBH, 70442 Stuttgart (DE)
(72) Erfinder: LAMPERT, Rico, 77880 Sasbach (DE); TASCH, Franz, 76287 Rheinstetten (DE); FIMPEL, Walter, 77815 Buehl (DE); HAUSSECKER, Walter, 77830 Buehlertal (DE); GOEDECKE, Martin, 77815 Buehl (DE); CHERMAT, Gael, F-67760 Gambsheim (FR)
(86) Internationale Anmeldenummer: PCT/DE2003/003234
(87) Internationale Veröffentlichungsnummer: WO 2004/033834

(56) Entgegenhaltungen:
- DE-A- 19 856 100
- DE-A- 19 958 036
- US-A- 3 103 800
- US-A- 4 541 296

## Beschreibung

### Stand der Technik

Die vorliegende Erfindung betrifft eine Getriebevorrichtung, insbesondere für Verstelleinrichtungen in Kraftfahrzeugen, mit den Merkmalen des Oberbegriffs des Patentanspruchs 1.

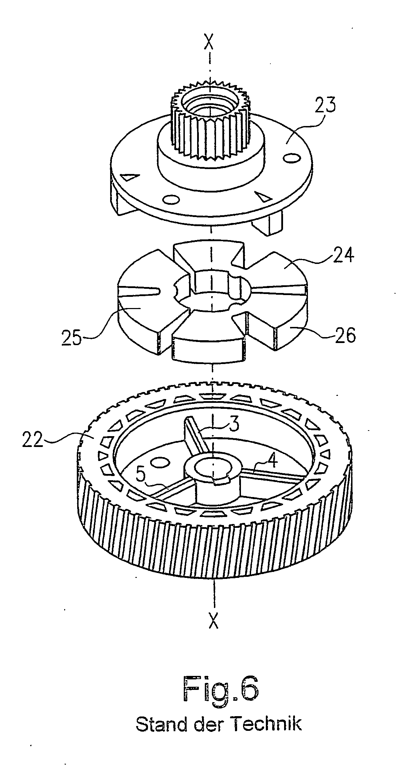

Getriebevorrichtungen werden beispielsweise bei Verstelleinrichtungen in Kraftfahrzeugen wie elektrischen Fensterhebern oder Schiebedächern, welche mittels eines Elektromotors betrieben werden, verwendet. Hierbei wird insbesondere ein Elektromotor verwendet, welcher über ein Getriebe z.B. das Fenster zwischen einer Öffnungs- und Schließ-Endstellung verstellt. Da es bei der Betätigung beim Anlaufen des Elektromotors oder bei Anschlagen an eine Endstellung zu Schwingungen und/oder unerwünschten Stoßbelastungen kommen kann, ist bekannt, zwischen zwei Getriebebauteilen Dämpfungselemente anzuordnen. In Figur 6 ist ein derartiger bekannter Aufbau dargestellt. Dabei sind drei gummielastische Dämpfungselemente 24, 25, 26 zwischen einem Stellrad 22, welches von einem Elektromotor über eine Schnecke angetrieben wird, und einem Mitnehmer 23 angeordnet. Dabei können die Dämpfungselemente 24, 25, 26 Schwingungen und Stöße in Umfangsrichtung dämpfen. Bei diesem Aufbau ist jedoch nachteilig, dass eine Vielzahl von einzelnen Bauteilen zur Realisierung der Dämpfung notwendig sind. Weiterhin ermöglicht diese Anordnung, insbesondere nach längerem Betrieb des Getriebes, ein Spiel in Axialrichtung X-X zwischen den beiden Getriebebauteilen 22 und 23, wodurch die Funktion des Getriebes verschlechtert wird und insbesondere auch Geräusche entstehen können.

Aus der DE 19856100 C2 ist eine Getriebevorrichtung, bestehend aus einem antriebsseitigen Getrieberad und einem abtriebsseitigen Mitnehmer, bekannt. Dabei sind am inneren Umfang des Getrieberades im Wesentlichen tangential verlaufende Querstege als Federelemente ausgebildet und am Mitnehmer sind entsprechend ausgebildete Nocken vorgesehen, um eine Anschlagdämpfung in Umfangsrichtung zu gewährleisten. Allerdings können hierbei axiale Stöße ebenfalls nicht gedämpft werden.

Mit der DE 199 58 036 A ist ein Versionsdämpfer bekannt geworden, bei dem ein Außenring, der von einer Getriebeverzahnung umgeben ist, über s-förmige federnde Stege mit einer inneren Nabe verbunden ist, um eine Dämpfung in Umfangsrichtung zu realisieren.

Die US 4 514 296 A zeigt ein Schneckengetriebe mit einem Schneckenrad, bei dem die Schneckenverzahnung über radiale Stege mit einer Nabe verbunden ist. Zwischen den radialen Stegen sind Anschlagselemente angeordnet, die die Torsionsdämpfung des Schneckenrades begrenzen.

Aus der US 3103 800 A Ist ein Kopplungselement für koaxiale Getriebefedern bekannt geworden, bei der radiale Stege eines Mitnehmerelements in entsprechende Aussparungen des Kopplungselements greifen, das mit einem Schneckenrad verbunden ist. Die radialen Stege sind elastisch ausgebildet, so dass sich diese innerhalb der korrespondierenden Aussparungen in gewissen Grenzen bezüglich der Umfangsrichtung verformen können.

### Vorteile der Erfindung

Die erfindungsgemäße Getriebevorrichtung mit den Merkmalen des Anspruchs 1 weist demgegenüber den Vorteil auf, dass sie sowohl Stöße und Schwingungen in Umfangsrichtung der Getriebebauteile als auch in Axialrichtung der Getriebebauteile gedämpft werden können. Somit kann die erfindungsgemäße Getriebevorrichtung auch ein axiales Spiel zwischen den beiden Getriebebauteilen ausgleichen, wobei die Getriebevorrichtung nur aus zwei Einzelbauteilen besteht. Die an einem oder an beiden Getriebebauteilen integral ausgebildeten Federelemente können dabei, abhängig von ihrer geometrischen Gestaltung, insbesondere hinsichtlich ihrer äußeren Form und Dicke, unterschiedliche Dämpfungscharakteristiken bereitstellen.
Gemäß der vorliegenden Erfindung sind am Mitnehmer zusätzliche Dämpfungslaschen integral gebildet, welche in Axialrichtung zum Stirnrad vorstehen und mit einem am Stirnrad gebildeten Bodenbereich In Kontakt stehen. Dadurch wird eine zusätzliche Dämpfung in Axialrichtung bereitgestellt sowie ein axiales Spiel zwischen den beiden Bauteilen und somit Insbesondere die Geräuschentwicklung auch bei sich ändernden Verhältnissen, beispielsweise infolge von Verschleiß beim Betrieb, verhindert werden kann.

Die Unteransprüche zeigen bevorzugte Weiterbildungen der Erfindung.

Vorzugsweise ist das integrale Dämpfungselement ein Federelement, welches besonders bevorzugt als mäanderförmiger Verbindungsbereich ausgebildet ist. Durch Verwendung eines Federelements als Dämpfungselement können die Vorteile einer Feder, wie schnelles, verzögerungsfreies Ansprechen bei Dämpfungsbedarf sowie geringer Verschleiß und schnelle Rückstellung erhalten werden.

Um einen möglichst kompakten Aufbau bereitzustellen, ist das erste Getriebebauteil als Stirnrad mit einer Vielzahl von nach innen gerichteten Rippen ausgebildet und das zweite Getriebebauteil als Mitnehmer, wobei die Dämpfungselemente in den Zwischenräumen zwischen den Rippen des Stirnrades angeordnet sind. Dadurch wird ein besonders in Axialrichtung kompakter Aufbau erhalten.

Um eine einfache Montage zu ermöglichen, sind vorzugsweise Montagehilfseinrichtungen wie Angriffsflächen oder Angriffsaussparungen integral an einem oder beiden Getriebebauteilen gebildet.

Zum Schutz der Dämpfungselemente vor Überbeanspruchung ist vorzugsweise wenigstens ein Anschlag vorgesehen, um eine maximale Retativverdrehung zwischen den beiden Getriebebauteilen vorzugeben.

Um eine besonders einfache Verbindung zwischen dem Stirnrad und dem Mitnehmer bereitzustellen, sind am Mitnehmer vorzugsweise Aussparungen zur Aufnahme der Rippen des Stirnrades ausgebildet Über die Seitenwände der Aussparungen und die daran anschließenden Dämpfungselemente wird dann das Drehmoment in gedämpfter Weise auf den Mitnehmer übertragen. Besonders bevorzugt sind dabei die Aussparungen am Mitnehmer in. Axialrichtung in einer sich verjüngenden Weise ausgebildet, sodass die Rippen des Stirnrades in den Aussparungen geklemmt werden können. Dadurch kann zusätzlich zu der durch das Dämpfungselement bereitgestellten Dämpfung in Axialrichtung auch das axiale Spiel der beiden Gelriebebauteile zueinander minimiert werden.

### Zeichnungen

Nachfolgend wird die Erfindung anhand der Zeichnungen beschrieben. Dabei ist:
- Figur 1: eine schematische, perspektivische Explosionsdarstellung einer Getriebevorrichtung gemäß einem ersten Ausführungsbeispiel ,
- Figur 2: eine schematische Ansicht von unten der in Figur 1 gezeigten Getriebevorrichtung,
- Figur 3: eine perspektivische Teilausschnittsansicht der in den Figuren 1 und 2 gezeigten Getriebevorrichtung,
- Figur 4: eine schematische Ansicht von unten einer Getriebevorrichtung gemäß einem zweiten Ausführungsbeispiel ,
- Figur 5: eine schematische Ansicht von unten einer Getriebevorrichtung gemäß einem Ausführungsbeispiel der vorliegenden Erfindung, und
- Figur 6: eine perspektivische Ansicht einer Getriebevorrichtung gemäß dem Stand der Technik.

### Beschreibung der Ausführungsbeispiele

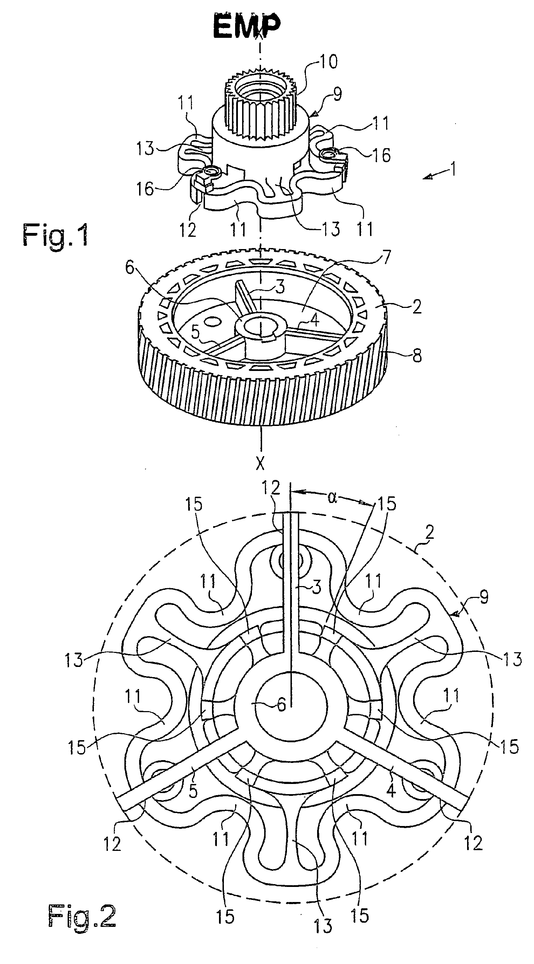

Nachfolgend wird unter Bezugnahme auf die Figuren 1 bis 3 eine Getriebevorrichtung 1 gemäß einem ersten Ausführungsbeispiel .

Wie in Figur 1 gezeigt, umfasst die Getriebevorrichtung 1 ein erstes Getriebebauteil in Form eines Stirnrades 2 und ein zweites Getriebebauteil in Form eines Mitnehmers 9. Das Stirnrad 2 ist im Wesentlichen als Hohlrad ausgebildet und weist drei Rippen 3, 4, 5 auf, welche mit einer Mittelbohrung 6 verbunden sind. Die Mittelbohrung 6 dient zur Lagerung des Stirnrades 2 auf einem nicht gezeigten Lagerbolzen. Am äußeren Umfang des Stirnrades 2 ist eine Verzahnung 8 in Form einer Schrägverzahnung ausgebildet, welche beispielsweise über eine Schnecke von einem Elektromotor angetrieben wird. Weiterhin weist das Stirnrad 2 an einem seiner in Axialrichtung stirnseitigen Enden einen Boden 7 auf.

Der Mitnehmer 9 umfasst ein Ritzel 10 und ist ebenfalls auf dem nicht dargestellten Lagerbolzen gelagert. Weiterhin ist am Mitnehmer 9 ein integrales Dämpfungselement in Form von einer Vielzahl von mäanderförmigen Federelementen 11 gebildet. Die Federelemente 11 grenzen mit ihrem einen Ende jeweils an einer Aussparung 12 und mit ihrem anderen Ende an einen Verbindungssteg 13, welcher eine Verbindung zum Mitnehmer 9 herstellt. Die Form und Anordnung der Federelemente 11 ist am besten aus der Unteransicht von Figur 2 ersichtlich, wobei zur besseren Übersichtlichkeit in Figur 2 das Stirnrad 2 nur gestrichelt angedeutet ist und der Boden 7 nicht dargestellt ist.

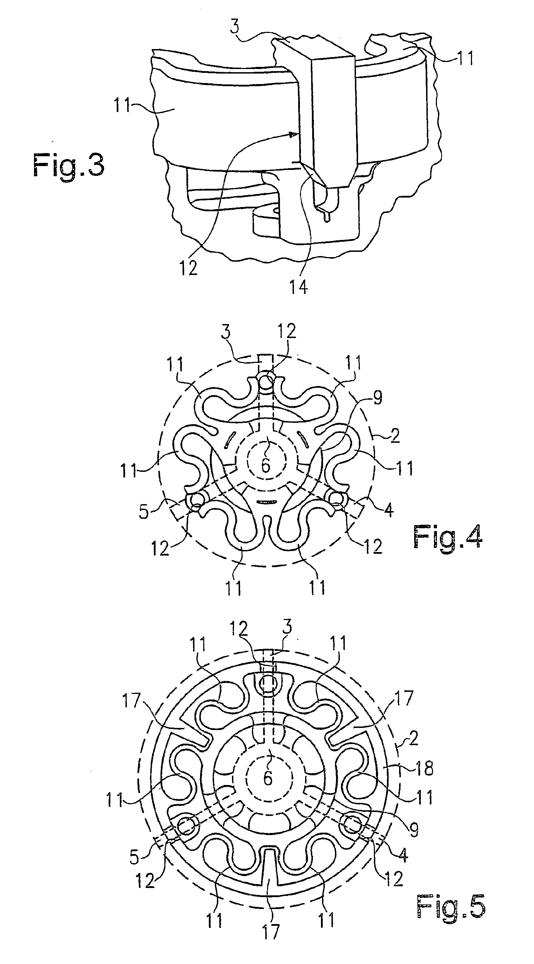

Wie insbesondere aus den Figuren 2 und 3 ersichtlich ist, greifen die drei Rippen 3, 4, 5 jeweils in eine Aussparung 12 des Mitnehmers 9 ein und stellen somit eine Verbindung zur Übertragung eines Drehmoments von dem Stirnrad 2 auf den Mitnehmer 3 bereit. Wie aus Figur 2 ersichtlich ist, sind die Federelemente 11 zu beiden Seiten in Umfangsrichtung der Aussparungen 12 jeweils gleich aufgebaut, sodass in beide Drehrichtungen eine gleiche Dämpfung erreicht wird. Somit werden beispielsweise beim Öffnen und Schließen eines Fensters die gleichen Dämpfungscharakteristiken erhalten. Weiterhin sind in beide Umfangsrichtungen, ausgehend von den Aussparungen 12, jeweils Anschläge 15 ausgebildet, welche eine relative Verdrehung zwischen den beiden Getriebebauteilen zu einander auf jeweils einen Winkel α in jede Umfangsrichtung begrenzt, da dann die Rippen 3, 4, 5 jeweils an einen Anschlag 15 anschlagen.

Weiterhin stellt die Getriebevorrichtung auch eine Dämpfung in Axialrichtung X-X bereit, da im zusammengebauten Zustand der beiden Getriebebauteile die Federelemente 11 mit einer vorbestimmten Vorspannung am Boden 7 des Stirnrades 2 anliegen. Dadurch wird ein axiales Spiel zwischen Stirnrad 2 und dem Mitnehmer 9 verhindert, sodass insbesondere Geräusche während des Betriebes des Getriebes wirkungsvoll unterbunden werden können.

Am Mitnehmer 9 sind weiterhin integrale Montagehilfseinrichtungen 16 in Form von Angriffsflächen für Montagewerkzeuge gebildet, um eine einfache Montage der Getriebevorrichtung 1 zu ermöglichen.

Wie weiterhin in Figur 3 dargestellt ist, ist die Aussparung 12 mit einem sich verjüngenden Bereich 14 gebildet, sodass im montierten Zustand des Stirnrads 2 am Mitnehmer 9 eine Verklemmung zwischen den Rippen 3, 4, 5 und den jeweiligen Aussparungen 12 hergestellt werden kann. Je nach Ausbildung der Verjüngung kann dabei auch die Vorspannung zwischen den beiden Getriebebauteilen eingestellt werden. Weiterhin stellt die Klemmverbindung zwischen den beiden Bauteilen eine zusätzliche redundante Sicherung gegen Spiel in Axialrichtung X-X bereit.

Die Funktion der Getriebevorrichtungen ist dabei wie folgt: Bei Betreiben des nicht dargestellten Elektromotors wird das auf einem Lagerbolzen gelagerte Stirnrad 2 in eine Umfangsrichtung angetrieben. Über die Rippen 3, 4, 5 des Stirnrades 2 und die Aussparungen 12 im Mitnehmer 9 wird der Mitnehmer 9 in entsprechender Richtung mitgenommen und somit das Abtriebsritzel 10 angetrieben. Sollten beim Anlaufen des Elektromotors Stöße oder Schwingungen auf das Stirnrad 2 übertragen werden, so werden derartige Belastungen in Umfangsrichtung durch Verbiegen der Federelemente 11 gedämpft. In Axialrichtung auftretende Stöße und Schwingungen werden über den Boden 7 des Stirnrades 2 in Axialrichtung X-X, insbesondere im Bereich der Verbindungsstege 13, auf die Federelemente 11 übertragen, wodurch eine Dämpfung in Axialrichtung erfolgt.

Somit werden durch die integral am Mitnehmer 9 gebildeten Federelemente 11 gleichzeitig Dämpfungen in Umfangsrichtung und in Axialrichtung erhalten. Dabei wird zur Dämpfung bei der Verformung der Federelemente 11 sowohl Torsion als auch Biegung verwendet. Weiterhin weist die erfindungsgemäße Getriebevorrichtung 1 in Axialrichtung X-X einen minimalen Bauraum auf, da die Federelemente und Teile des Mitnehmers 9 vollständig in den Zwischenräumen zwischen den Rippen 3, 4, 5 des Stirnrades 2 angeordnet sind.

Nachfolgend wird unter Bezugnahme auf Figur 4 eine Getriebevorrichtung gemäß einem zweiten Ausführungsbeispiel beschrieben. Dabei sind gleiche bzw. funktional gleiche Teile wieder mit den gleichen Bezugszeichen wie im ersten Ausführungsbeispiel bezeichnet.

Wie aus Figur 4 ersichtlich ist, grenzen die Federelemente 11 des zweiten Ausführungsbeispiels im Unterschied zum ersten Ausführungsbeispiel unmittelbar an die Aussparungen 12 und den Mitnehmer 9 an. Im Vergleich zum ersten Ausführungsbeispiel wird somit auf die Verbindungsstege 13 verzichtet, sodass die Federelemente 11 des zweiten Ausführungsbeispiels eine geringe Steifigkeit bereitstellen. Ansonsten entspricht das zweite Ausführungsbeispiel im Wesentlichen dem ersten Ausführungsbeispiel, sodass auf die dort gegebene Beschreibung verwiesen werden kann.

Nachfolgend wird unter Bezugnahme auf Figur 5 eine Getriebevorrichtung 1 gemäß einem Ausführungsbeispiel der vorliegenden Erfindung beschrieben. Gleiche bzw. funktional gleiche Teile sind wieder mit den gleichen Bezugszeichen wie in den vorhergehenden Ausführungsbeispielen bezeichnet.

Erfindungdgemäβe Das Ausführungsbeispiel entspricht im Wesentlichen dem zweiten Ausführungsbeispiel, wobei an einem Ring 18 zusätzlich drei Dämpfungslaschen 17 angeordnet sind. Die Dämpfungslaschen 17 sind am Ring 18 an der zum Stirnrad 2 gerichteten Seite angeordnet und stehen etwas in Axialrichtung zum Stirnrad hin vor. Dadurch liegen sie im montierten Zustand am Boden 7 des Stirnrades 2 an, und stellen eine zusätzliche Dämpfung und Vorspannung des Mitnehmers 9 in Axialrichtung bereit. Dadurch wird eine Dämpfung in Axialrichtung erreicht und durch die bei der Montage bereitgestellte Vorspannung der Dämpfungslaschen 17 wird ein Spiel zwischen den beiden Getriebebauteilen wirksam verhindert. Eine Dämpfung in Umfangsrichtung erfolgt mittels der Federelemente 11. Ansonsten entspricht dieses Ausführungsbeispiel den beiden vorhergehenden Ausführungsbeispielen, sodass auf die dort gegebene Beschreibung verwiesen werden kann.

Allgemein sei angemerkt, dass durch spezielle geometrische Ausbildung der Federelemente 11 beispielsweise hinsichtlich ihrer Form und/oder ihrer Dicke unterschiedliche Dämpfungscharakteristiken bereitgestellt werden können. Der Fachmann wird daher entsprechend dem jeweiligen Anwendungsfall die geometrische Ausbildung dieser Federelemente 11 in beliebiger Weise vornehmen.

Die erfindungsgemäße Getriebevorrichtung 1 wird vorzugsweise in Kraftfahrzeugen zur Übersetzung bzw. Untersetzung der Drehzahlen eines elektrischen Antriebes, beispielsweise für elektrische Fensterheber oder elektrische Schiebedächer oder elektrisch verstellbare Außenspiegel oder Sitze usw. verwendet.

## Patentansprüche

1. Getriebevorrichtung, umfassend ein erstes Getriebebauteil (2) und ein als Mitnehmer ausgebildetes zweites Getriebebauteil (9), welche drehbar miteinander verbunden sind, wobei zwischen dem ersten und dem zweiten Getriebebauteil (2, 9) ein Dämpfungselement (11) angeordnet ist, wobei das Dämpfungselement (11) integral mit dem ersten und/oder dem zweiten Getriebeelement (2, 9) gebildet ist und das Dämpfungselement (11) eine Dämpfung in Umfangsrichtung der Getriebebauteile und in Axialrichtung (X-X) der Getriebebautelle bereitstellt, **dadurch gekennzeichnet, dass** das erste Getriebebauteil (2) als Stirnrad mit einer Vielzahl von nach innen gerichteten Rippen (3, 4, 5) ausgebildet ist, wobei am Mitnehmer Dämpfungslaschen (17) integral gebildet sind, welche vom Mitnehmer in Axialrichtung (X-X) In Richtung des Stirnrades (2) vorstehen und das Stirnrad (2) einen Bodenbereich (7) aufweist, gegen weichen die Dämpfungslaschen (17) im montierten Zustand drücken, um eine Vorspannung in Axialrichtung (X-X) bereitzustellen.

2. Getriebevorrichtung nach Anspruch 1, **dadurch gekennzeichnet, dass** das Dämpfungselement (11) als Federelement ausgebildet ist.

3. Getriebevorrichtung nach Anspruch 2, **dadurch gekennzeichnet, dass** das Federelement durch mäanderförmige Bereiche zwischen dem ersten und dem zweiten Getriebebauteil (2, 9) gebildet ist.

4. Getriebevorrichtung nach einem der Ansprüche 2 bis 3, **dadurch gekennzeichnet, dass** in Axialrichtung auftretende Stöße und Schwingungen über den Boden (7) des Stirnrades (2) in Axialrichtung X-X auf die Federelemente (11) übertragen werden, wodurch eine Dämpfung in Axialrichtung X-X erfolgt.

5. Getriebevorrichtung nach einem der Ansprüche 1 bis 4, **dadurch gekennzeichnet, dass** der Mitnehmer mit integral gebildetem Ritzel (10) ausgebildet ist

6. Getriebevorrichtung nach einem der Ansprüche 1 bis 5, **gekennzeichnet durch** wenigstens einen Anschlag (15), um eine Relativverdrehung zwischen dem ersten Getriebebauteil (2) und dem zweiten Getriebebauteil (9) zu begrenzen.

7. Getriebevorrichtung nach einem der Ansprüche 4 bis 6, **dadurch gekennzeichnet, dass** am Mitnehmer Aussparungen (12) zur Aufnahme der Rippen (3, 4, 5) des Stirnrades (2) ausgebildet sind.

8. Getriebevorrichtung nach Anspruch 7, **dadurch gekennzeichnet, dass** die Aussparungen (12) in Axialrichtung (X-X) einen sich verjüngenden Bereich (14) aufweisen, um eine Klemmverbindung zwischen den Rippen (3, 4, 5) und der Aussparung (12) bereitzustellen.

9. Getriebevorrichtung nach einem der Ansprüche 2 bis 8, **dadurch gekennzeichnet, dass** die Federelemente (11) und Teile des Mitnehmers (9) vollständig in den Zwischenräumen zwischen den Rippen (3, 4, 5) des Stirnrades (2) angeordnet sind.

## Claims

1. Gearbox device, comprising a first gearbox component (2) and comprising a second gearbox component (9) formed as a driver, which gearbox components are rotatably connected to one another, wherein a damping element (11) is arranged between the first and the second gearbox component (2, 9), wherein the damping element (11) is formed integrally with the first and/or the second gearbox element (2, 9) and the damping element (11) imparts damping in the circumferential direction of the gearbox components and in the axial direction (X-X) of the gearbox components, **characterized in that** the first gearbox component (2) is formed as a spur gear with a multiplicity of inwardly directed ribs (3, 4, 5), wherein on the driver there are integrally formed damping lugs (17) which protrude from the driver in the axial direction (X-X) in the direction of the spur gear (2), and the spur gear (2) has a base region (7) against which, in the assembled state, the damping lugs (17) press so as to generate a preload in the axial direction (X-X).

2. Gearbox device according to Claim 1, **characterized in that** the damping element (11) is formed as a spring element.

3. Gearbox device according to Claim 2, **characterized in that** the spring element is formed by meandering regions between the first and the second gearbox component (2, 9).

4. Gearbox device according to either of Claims 2 and 3, **characterized in that** shocks and vibrations occurring in the axial direction are transmitted in the axial direction X-X via the base (7) of the spur gear (2) to the spring elements (11), whereby damping is realized in the axial direction X-X.

5. Gearbox device according to one of Claims 1 to 4, **characterized in that** the driver is formed with an integrally formed pinion (10).

6. Gearbox device according to one of Claims 1 to 5, **characterized by** at least one stop (15) for limiting a relative rotation between the first gearbox component (2) and the second gearbox component (9).

7. Gearbox device according to one of Claims 4 to 6, **characterized in that** cutouts (12) for receiving the ribs (3, 4, 5) of the spur gear (2) are formed on the driver.

8. Gearbox device according to Claim 7, **characterized in that** the cutouts (12) have, in the axial direction (X-X), a tapering region (14) for providing a clamped connection between the ribs (3, 4, 5) and the cutout (12).

9. Gearbox device according to one of Claims 2 to 8, **characterized in that** the spring elements (11) and parts of the driver (9) are arranged entirely in the intermediate spaces between the ribs (3, 4, 5) of the spur gear (2).

## Revendications

1. Dispositif d'engrenage, comprenant un premier composant d'engrenage (2) et un deuxième composant d'engrenage (9) réalisé sous forme de dispositif d'entraînement, lesquels sont connectés l'un à l'autre de manière rotative, un élément d'amortissement (11) étant disposé entre le premier et le deuxième composant d'engrenage (2, 9), l'élément d'amortissement (11) étant formé intégralement avec le premier et/ou le deuxième élément d'engrenage (2, 9) et l'élément d'amortissement (11) fournissant un amortissement dans la direction périphérique des composants d'engrenage et dans la direction axiale (X-X) des composants d'engrenage, **caractérisé en ce que** le premier composant d'engrenage (2) est réalisé sous forme de pignon droit avec une pluralité de nervures (3, 4, 5) orientées vers l'intérieur, des pattes d'amortissement (17) étant formées intégralement sur le dispositif d'entraînement, lesquelles font saillie depuis le dispositif d'entraînement dans la direction axiale (X-X) dans la direction du pignon droit (2), et le pignon droit (2) présentant une région de fond (7) contre laquelle les pattes d'amortissement (17) font pression dans l'état monté, afin de fournir une précontrainte dans la direction axiale (X-X).

2. Dispositif d'engrenage selon la revendication 1, **caractérisé en ce que** l'élément d'amortissement (11) est réalisé sous forme d'élément de ressort.

3. Dispositif d'engrenage selon la revendication 2, **caractérisé en ce que** l'élément de ressort est formé par des régions en méandres entre le premier et le deuxième composant d'engrenage (2, 9).

4. Dispositif d'engrenage selon l'une quelconque des revendications 2 à 3, **caractérisé en ce que** des chocs et des oscillations se produisant dans la direction axiale sont transmis par le biais du fond (7) du pignon droit (2) dans la direction axiale (X-X) aux éléments de ressort (11), de sorte qu'un amortissement se produise dans la direction axiale (X-X).

5. Dispositif d'engrenage selon l'une quelconque des revendications 1 à 4, **caractérisé en ce que** le dispositif d'entraînement est réalisé avec un pignon (10) formé intégralement.

6. Dispositif d'engrenage selon l'une quelconque des revendications 1 à 5, **caractérisé par** au moins une butée (15) afin de limiter une rotation relative entre le premier composant d'engrenage (2) et le deuxième composant d'engrenage (9).

7. Dispositif d'engrenage selon l'une quelconque des revendications 4 à 6, **caractérisé en ce que** des évidements (12) sont réalisés sur le dispositif d'entraînement pour recevoir les nervures (3, 4, 5) du pignon droit (2).

8. Dispositif d'engrenage selon la revendication 7, **caractérisé en ce que** les évidements (12) présentent dans la direction axiale (X-X) une région (14) qui se rétrécit, afin de fournir une liaison par serrage entre les nervures (3, 4, 5) et l'évidement (12).

9. Dispositif d'engrenage selon l'une quelconque des revendications 2 à 8, **caractérisé en ce que** les éléments de ressort (11) et des parties du dispositif d'entraînement (9) sont disposés complètement dans les espaces intermédiaires entre les nervures (3, 4, 5) du pignon droit (2).
